# EUROPEAN PATENT APPLICATION

(11) **EP 1 365 491 A1**
(43) Date of publication of application: **26.11.2003**
(21) Application number: 02011374.2
(22) Date of filing: 23.05.2002
(51) Int. Cl.: H02B 1/38, H02B 1/30

(54) **A modular cabinet**

(71) Applicant: Jeepson Techno Services LLC, San Diego, CA 92121 (US)
(72) Inventor: Aleman Z., Ricardo J., Jeepson Techno Service LLC, San Diego, CA 92121 (US)
(74) Representative: Popp, Eugen, Dr.

(57) **Abstract**

A modular cabinet (1) for use in the accommodation of electrical components, especially telecommunication equipment comprises a cuboid structure (2, 3, 4) with at least one access door (5). The lateral walls (4) of the cabinet (1) are adapted for interconnection with another similar cabinet (1) such that together they can form a constructional unit with a continuous interior space. For example, the lateral walls (4) may comprise at least one rectangular frame (21) surrounding a removable wall portion (22) so that removal of two apposed wall portions (22) of two cabinets (1) enables them to be connected together via the rectangular frames (21) to provide a larger constructions unit defining a continuous interior space. This space enables the conjoined cabinets (1) to be ventilated, powered, air-conditioned or otherwise serviced as though they were a single unit.

## Description

The present invention relates to a modular cabinet, particularly but not exclusively for use in the accommodation of electrical components, especially telecommunication equipment.

Cabinets for use in the accommodation of electrical components and particularly those used for telecommunications equipment are typically situated on flat rooftops, on balconies and other suitable exterior places on buildings and structures. They are also located on open terrain and in open public spaces. As a result they must be weather-proof. Similar cabinets are also used indoors for housing computer equipment.

The object of the present invention is to provide a modular cabinet which can be combined with other similar cabinets to provide a larger unit which offers improvements over those used hitherto.

According to the present invention there is provided a modular cabinet particularly but not exclusively for use in the accommodation of electrical components comprising a cuboid structure with at least one access door and characterised in that it is adapted for interconnection with another similar cabinet such that together they can form a constructional unit with a continuous interior space.

The term 'cuboid' as used herein and in the claims is to be understood to mean that the cabinet substantially defines a geometric solid whose six faces or sides are rectangles.

It will be appreciated that the advantage of the invention is that several modular cabinets in accordance therewith can be connected together such that they define a continuous interior space that can be ventilated, powered, air-conditioned or otherwise serviced as though they were a single unit. In addition, the larger unit made up of the cabinets can be built in a suitable configuration to fit into any available space. The advantages of such an arrangement are therefore considerable.

Preferably, the cabinet has lateral walls comprising at least one frame surrounding a removable wall portion.

Preferably also, three lateral walls of the cabinet each comprise a rectangular frame surrounding at least one removable wall portion and the fourth lateral wall is at least partially defined by the access door.

Preferably also, the frame is adapted to accommodate a seal. Advantageously, the seal comprises a ring-seal.

Preferably also, the frames define bolting-holes.

Preferably also, the access door comprises ventilation louvres.

Preferably also, the access door is mounted by way of a horizontally disposed hinge means.

In a first arrangement, the access door hinges upwards and can be retained in an open position by struts. Preferably, the open door forms a weather shield beneath which an operative can stand to access the interior of the cabinet. Advantageously, the door is also provided with front and/or side hinged flaps that can be opened out from the door when open to provide additional weather protection. Preferably also, the struts comprise pneumatic springs.

In a second arrangement, the access door hinges downwards and can be held in a substantially horizontal position by a retaining means. Preferably, the retaining means comprises chains or cords. Preferably also, the door forms a standing platform on which an operative can stand to access the interior of the cabinet.

Advantageously, the cabinet comprises first and second access doors in the same lateral wall on the cabinet and disposed respectively to hinge upwards and downwards in accordance with the first and second arrangement above.

Alternatively, one of the access doors is mounted by way of a vertically horizontally disposed hinge means. In such a cabinet, a second access door can be provided which is mounted by way of a horizontally disposed hinge means, as aforesaid.

Preferably also, the cabinet is provided with height adjustable feet connected to its base wall.

Preferably also, the adjustable feet are mounted on wheels or castors.

Advantageously, the cabinet is provided with a cable rack.

Preferably also, the cabinet is adapted for interconnection with another similar cabinet to form a constructional unit with a continuous interior space provided by removal of removable wall portions in areas of the cabinets' lateral walls located above the cable racks such that cabling between the cabinets can be located in this continuous interior space.

Alternatively or in addition, the cabinet is provided with a bottom compartment with at least one removable lateral wall portion such that the cabinet can be interconnected with another similar cabinet to form a constructional unit with a continuous interior space provided by removal of the removable wall portions in the bottom compartments.

Preferably also, an air conditioning system is provided which is active in the continuous interior space provided by removal of the removable wall portions in the bottom compartments.

Embodiments of the present invention will now be described by way of example with reference to the accompanying drawings, in which:-
Figs. 1 to 4 are plan views of modular cabinets in accordance with the present invention which have been interconnected to form larger units in various configurations;
Fig. 5 is another plan view similar to Figs., 1 to 4 wherein the larger unit forms an L-shaped configuration and each of the individual modular cabinet with their access doors in open positions;
Fig. 6 is a front elevation of a modular cabinet in accordance with the invention with upper and lower access doors shown in open positions;
Fig. 7 is a view similar to Fig. 6 but of a different embodiment of cabinet and with access doors shown closed;
Figs. 8a, 8b and 8c are side elevations showing various embodiments of access doors for use in a cabinet according to the invention;

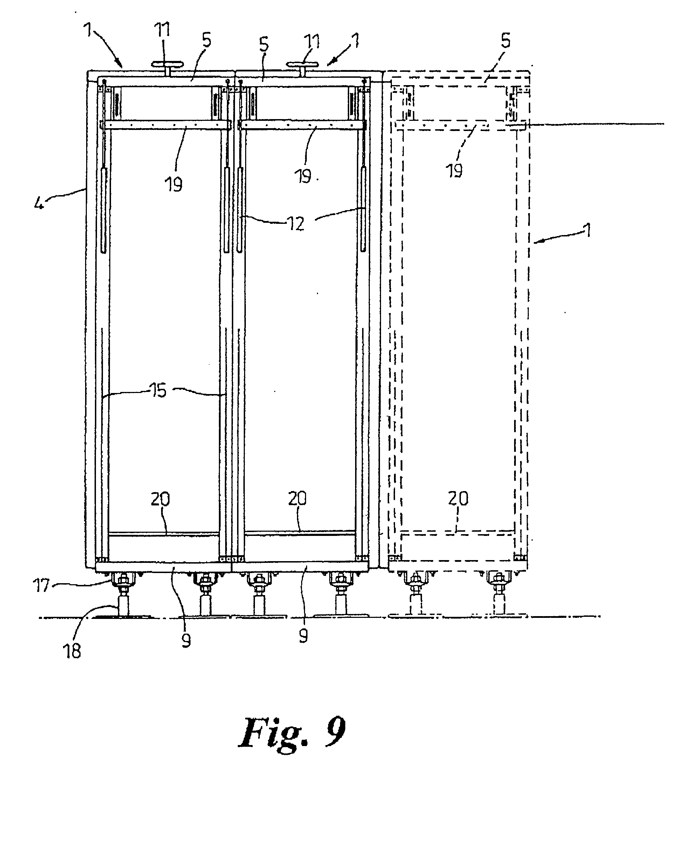

Fig. 9 is a front elevation of three cabinets similar to that shown in Fig. 6 which have been interconnected to form a larger unit;
Fig. 10 is a side view of two cabinets similar to that shown in Fig. 6 which have been interconnected back-to-back and with their access doors shown open;
Fig. 11 is a vertical cross-sectional view of two cabinets which have been interconnected;
Fig. 12 is a detail, to an enlarged scale, of the area ringed XII in Fig. 11;
Fig. 13 is a view of a lateral wall forming part of a cabinet according to the invention;
Fig. 14 is a view similar to Fig. 13 but with a wall portion removed to reveal the position of a bottom compartment within a cabinet; and
Fig. 15 is a perspective view of the bottom compartment shown in Fig. 14.

The same numerals will be used in the following description to refer to the various components of the embodiments described which are the same or have the same function.

A modular cabinet 1 in accordance with the invention comprises a cuboid structure such that the cabinet 1 has six rectangular faces in order that it can be interconnected with at least one other similar cabinet 1 by fastening together two adjoining lateral walls in a manner wherein they then form a larger constructional unit with a continuous interior space. This is described in more detail below.

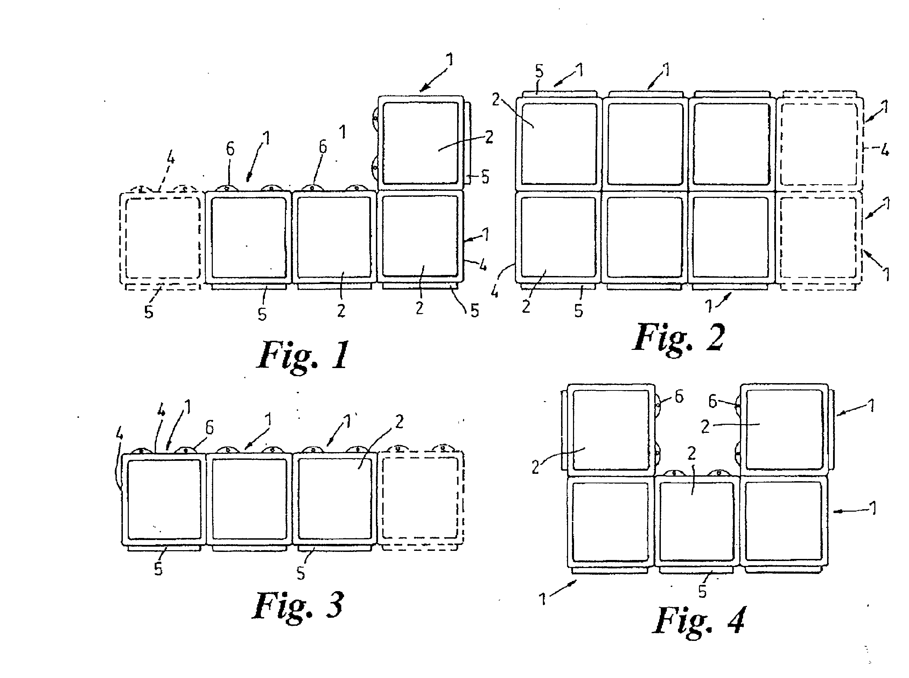

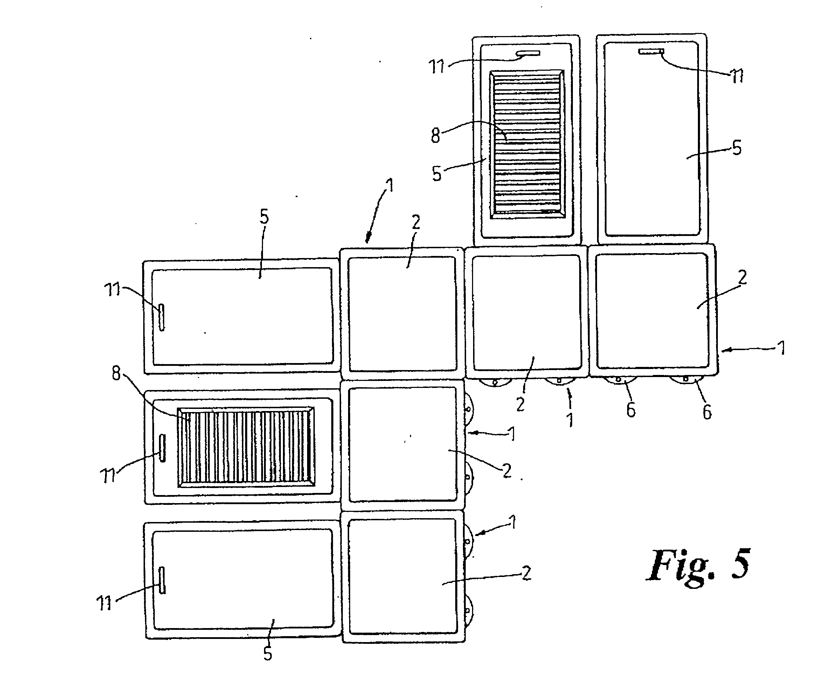

Preferably, as shown in the drawings, the cabinet 1 has square top and bottom walls, 2 and 3 respectively, and rectangular lateral walls 4, the height of the cabinet 1 being considerably greater that its width and depth so that it defines a tall cabinet. In each case, the cabinet 1 is provided with a least one access door 5. As shown in Figs. 1 to 5, the cabinet 1 may also be provided projecting brackets or lugs 6 on at least one side in order that it can be externally secured to an adjacent structure. Usually, the brackets or lugs 6 will be provided on the back side of the cabinet 1 opposite the front side in which the access door 5 is provided.

The cabinet 1 can be interconnected with other similar cabinets 1 in a variety of configurations, as shown in Figs. 1 to 5, to suit the equipment to be housed therein and the space available to accommodate the combined unit. Single or double banks of cabinets 1, as well as U-shaped and L-shaped configurations can be made up.

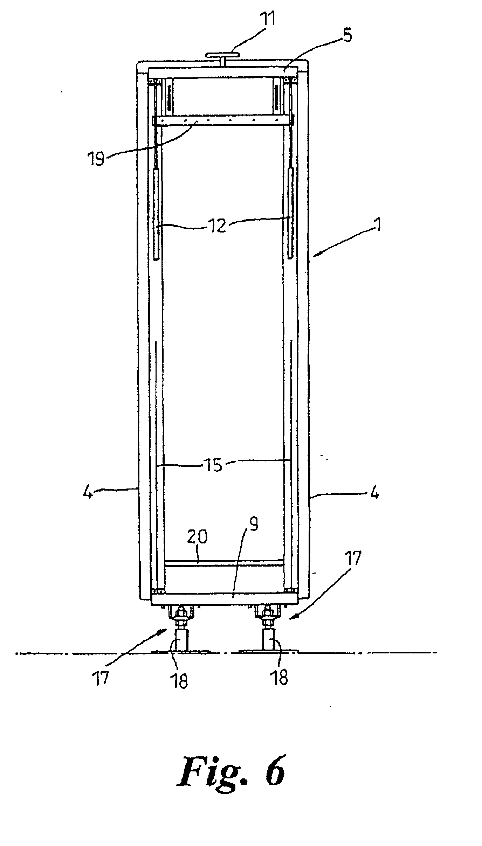

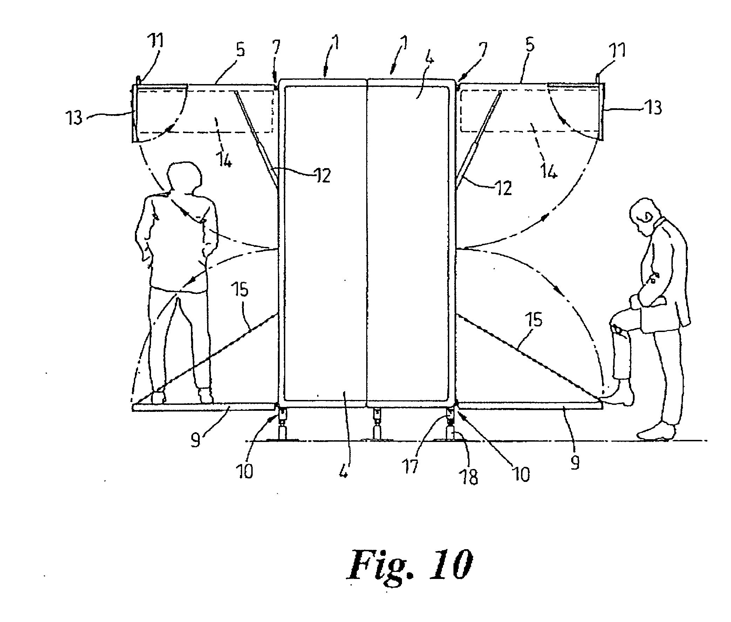

In the L-shaped configuration shown in Fig. 5, the access doors 5 of the cabinets 1 are arranged around the outside of the L-shape and each is mounted by way of a horizontally disposed hinge means 6 (see Fig. 10). The doors 5 each hinge upwardly into a substantially horizontal position to provide access to the interior of the cabinets 1 along the two outer sides of the L-shape. In this particular example, two of doors 5 are provided with ventilation louvres 8 through which an air-conditioning system can draw in and expel air and which will in any event enable the interior of the cabinets 1 to be ventilated.

The interior of the cabinet 1 and door arrangement is shown in more detail in Figs. 6 and 10. In this embodiment, the cabinet 1 has two access doors on its front lateral wall, namely the door 5, which hinges upwards on hinge means 6 located along the top horizontal edge of the front lateral wall, and a door 9, which hinges downwards on horizontally disposed hinge means 10 located along the bottom horizontal edge of the front lateral wall. At least one of the doors, in this embodiment the upper door 5, is provided with a locking handle 11, which after use in opening the door 5 enable a locking means (not shown) for the lower door 9 to be released.

The door 5 can be retained in a substantially horizontal open position by struts 12, which preferably comprise pneumatic springs that can support the weight of the door 5 and assist when opening the door 5. in the open position, the door 5 forms a weather shield beneath which an operative (see Fig, 10) can stand to access the interior of the cabinet 1. In a modification, the door 5 can be provided with front and/or side hinged flaps 13 and 14 respectively that can be opened out from the door 5 when open to provide additional weather protection.

In contrast, the access door 9 hinges downwards and can be held in a substantially horizontal position by a retaining means 15 such as a pair of chains or cords. In this position the door 9 forms a standing platform on which the operative can stand beneath the door 5 to access the interior of the cabinet 1. Preferably, therefore, the cabinet 1 has a height higher than the average man to enable him to operate with comfort when standing on the door 9.

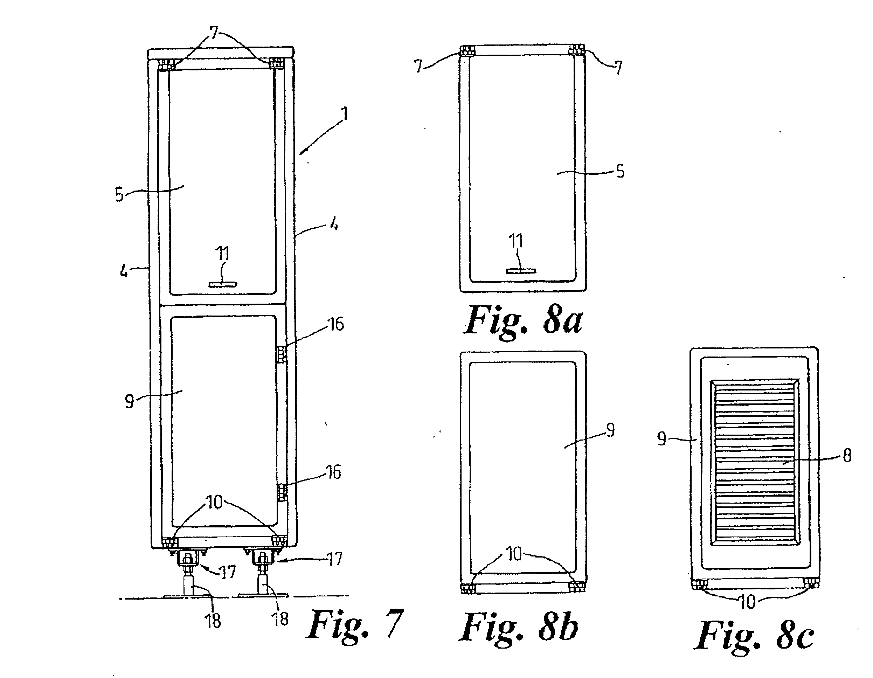

In a modification, as shown in Fig. 7, the cabinet 1 can be provided with a door, in this case the lower door 9, that hinges to one side about vertically disposed hinge means 16. As shown in Fig. 8c, the lower door 9 may also be provided with ventilation louvres 8.

To keep the cabinet 1 off the ground and to facilitate leveling and its location in any position, the cabinet 1 is provided with height adjustable pedestal feet 17 connected to its bottom, downwardly facing face 3. The feet 17 may be also be mounted on wheels or castors 18.

The interior of the cabinet 1 is fitted out dependent on its intended use. Typically, for the accommodation of electrical or electronic equipment for telecommunication systems or computer systems, the upper portion of the cabinet 1 can be provided with one or more cable racks 19 and the lower portion can be provided with a grille 20 to separate the interior space into two areas.

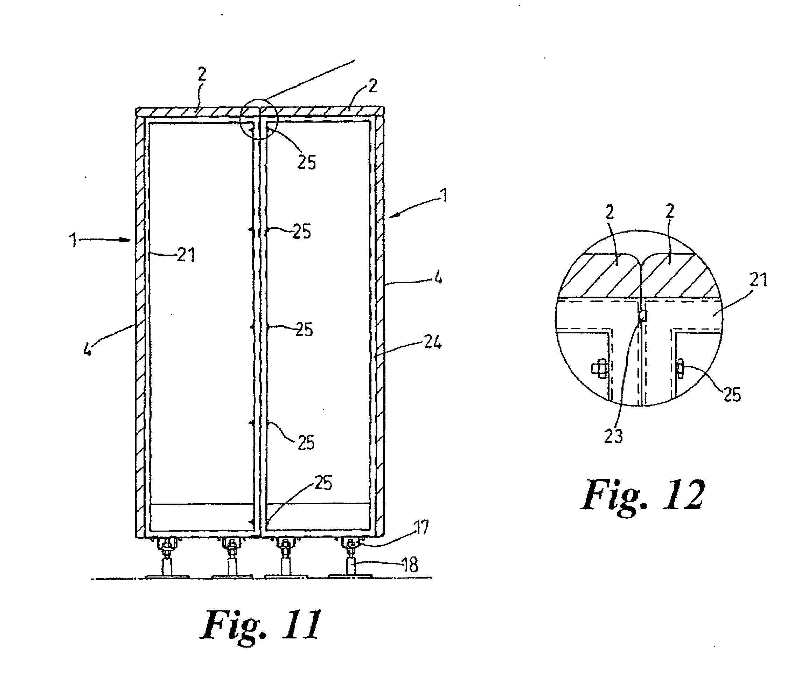

Referring now particularly to Figs. 11 to 15, the cabinet 1 is adapted for interconnection with another similar cabinet 1 by virtue of the structure of its lateral walls 4. Each of the lateral walls 4 is constructed with at least one rectangular frame 21 surrounding a removable wall portion 22. The frames 21 are adapted to accommodate a seal 23, such as a ring-seal or O-ring, and defines regularly spaced bolting-holes 24. When it is desired to interconnect two cabinets 1, the lateral walls 4 of each cabinet 1 that lie adjacent one another can have one or more apposed wall portions 22 removed. The seal 23 is then appropriately fitted, for example by being located in a channel pre-formed in the frames 21 for this purpose or by being pushed over the edge of one of the frames 21 formed when the wall portion 23 has been removed. The two cabinets 1 are then bolted together by passing bolts 25 through various of the bolting holes 24 at spaced intervals around the frames 21 so that the cabinets 1 are firmly secured together to form a larger constructional unit. The removed wall portions 25 thereby enable the conjoined cabinets to enjoy a continuous interior space.

The lateral walls 4 can be adapted so that the wall portions 22 that can be removed therefrom cover most of the lateral wall 4, for example as shown in Fig. 11, or only part of the lateral wall 4 dependent on the shape of the frame 21. For example, the frame 21 can include intermediate horizontal portions to enable only an upper or lower wall portion 22 to be removed from the face 4. In this way, the lateral walls 4 can be adapted by removal of removable wall portions 22 in areas located above the cable racks 19 such that cabling between the cabinets 1 can be located in this continuous interior space.

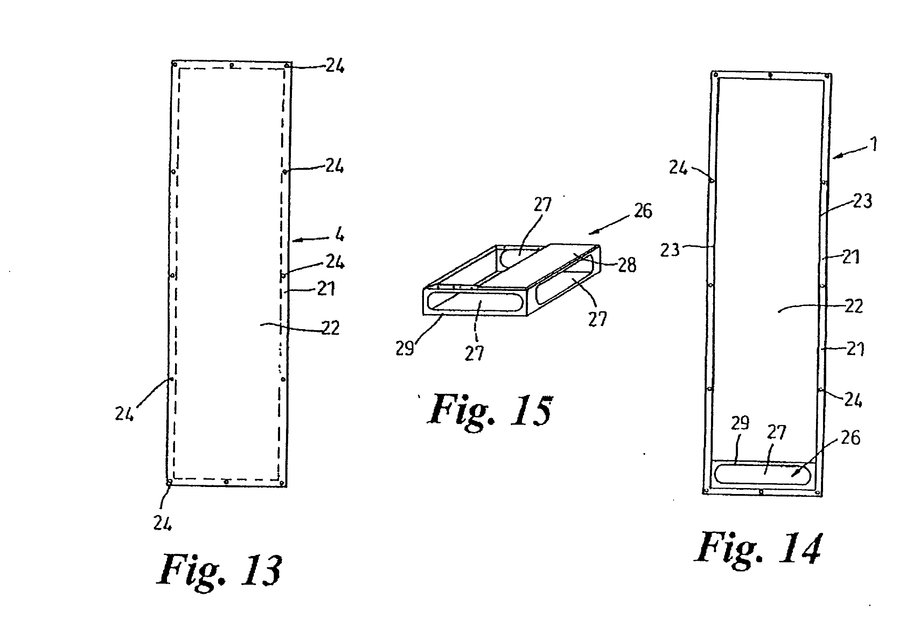

Alternatively or in addition, the cabinet 1 can be provided with a bottom compartment 26, as shown in Figs. 14 and 15, which has at least one removable lateral wall portion 27 and a modular top cover 28. A seal 29 can be fitted around the exposed edges of the compartment 26 formed after removal of the wall portions 27. Cabinets 1 as shown in Fig. 14 that are provided with such a compartment 25 can be interconnected with another, after apposed wall portions 27 have been removed, to form a constructional unit with a continuous interior space at the bottom of the unit. Such an interior space is especially useful for use as a plenum chamber of an air-conditioning system provided for the unit.

Hence, the cabinet 1 of the invention can be interconnected with other similar cabinets 1 in such a way as to define a continuous interior space across all of them that can be used for various purposes. For example the larger unit can be ventilated, powered, air-conditioned or otherwise serviced as a single unit. The lateral walls 4 can be adapted, as appropriate to provide the continuous interior space required dependent on the use to which the cabinets 1 are to be put.

As already indicated, the cabinet 1 has been designed for outdoor use and is therefore manufactured so as to be weather-proof, the access door 5 or doors 5 and 9 being provided with appropriate locking means and seals to prevent tampering and to exclude moisture.

## Claims

1. A modular cabinet (1) particularly but not exclusively for use in the accommodation of electrical components comprising a cuboid structure (2, 3, 4)with at least one access door (5, 9) and
**characterised in that**
it is adapted for interconnection with another similar cabinet (1) such that together they can form a constructional unit with a continuous interior space.

2. A cabinet (1) as claimed in Claim 1,
**characterised in that**
it has lateral walls (4) comprising at least one frame (21) surrounding a removable wall portion (22).

3. A cabinet (1) as claimed in Claim 2,
**characterised in that**
three lateral walls (4) of the cabinet each comprise a rectangular frame (21) surrounding at least one removable wall portion (22) and the fourth lateral wall (4) is at least partially defined by the access door (5, 9) .

4. A cabinet (1) as claimed in Claim 2 or Claim 3,
**characterised in that**
the frame (21) is adapted to accommodate a seal (23).

5. A cabinet (1) as claimed in Claim 4,
**characterised in that**
the seal (23) comprises a ring-seal.

6. A cabinet (1) as claimed in any of Claims 2 to 5,
**characterised in that**
the frame (21) defines bolting-holes (24).

7. A cabinet (1) as claimed in any of Claims 1 to 6,
**characterised in that**
the access door (5, 9) comprises ventilation louvres (8).

8. A cabinet (1) as claimed in any of Claims 1 to 7,
**characterised in that**
the access door (5, 9) is mounted by way of a horizontally disposed hinge means (7, 10).

9. A cabinet (1) as claimed in any of Claims 1 to 8,
**characterised in that**
the access door hinges (5) upwards and can be retained in an open position by struts (12).

10. A cabinet (1) as claimed in Claim 9,
**characterised in that**
the struts (12) comprise pneumatic springs.

11. A cabinet (1) as claimed in any of Claims 1 to 10,
**characterised in that**
the access door (5), when open, forms a weather-shield beneath which an operative can stand to access the interior of the cabinet (1).

12. A cabinet (1) as claimed in Claim 11,
**characterised in that**
the access door (5) is provided with front and/or side hinged flaps (13, 14) that can be opened out from the door (5) when open to provide additional weather protection.

13. A cabinet (1) as claimed in any of Claims 1 to 8,
**characterised in that**
the access door hinges (9) downwards and can be held in a substantially horizontal position by a retaining means (15).

14. A cabinet (1) as claimed in Claim 13,
**characterised in that**
the retaining means (15) comprises a chain or cord.

15. A cabinet (1) as claimed in Claim 13 or 14,
**characterised in that**
the access door (9) forms a standing platform on which an operative can stand to access the interior of the cabinet (1).

16. A cabinet as claimed in any of Claims 1 to 15,
**characterised in that**
it comprises first and second access doors (5, 9) in the same lateral wall (4) of the cabinet (1).

17. A cabinet (1) as claimed in Claim 16,
**characterised in that**
the first access door (5) the access door hinges upwards and can be retained in an open position by struts (12) and the second access door (9) hinges downwards.

18. A cabinet (1) as claimed in Claim 16,
**characterised in that**
the first access door (5) hinges upwards and can be retained in an open position by struts (12) and the second access door (9) is mounted by vertically disposed hinge means (16).

19. A cabinet (1) as claimed in any of Claims 1 to 18,
**characterised in that**
it is provided with height adjustable feet (17) connected to its base wall (3).

20. A cabinet (1) as claimed in Claim 19,
**characterised in that**
the adjustable feet (17) are mounted on wheels or castors (18).

21. A cabinet (1) as claimed in any of Claims 1 to 20,
**characterised in that**
it contains a cable rack (19).

22. A cabinet (1) as claimed in Claim 21,
**characterised in that**
it is adapted for interconnection with another similar cabinet (1) to form a constructional unit with a continuous interior space provided by removal of removable wall portions (22) in areas of the cabinets' lateral walls (4) located above the cable racks (19) such that cabling between the cabinets (1) can be located in this continuous interior space.

23. A cabinet (1) as claimed in any of Claims 1 to 22,
**characterised in that**
it is provided with a bottom compartment (26) that has at least one removable lateral wall portion (27) such that the cabinet (1) can be interconnected with another similar cabinet (1) to form a constructional unit with a continuous interior space provided by removal of the removable wall portions (27) in their bottom compartments (26).

24. A cabinet (1) as claimed in any of Claims 1 to 23,
**characterised in that**
it comprises an external bracket or lug (6) for connection of the cabinet (1) to an adjacent structure.
